**Europäisches Patentamt**

**European Patent Office**

**Office européen des brevets**

(19)

(11) Numéro de publication: **0 243 251**
**B1**

(12)

# FASCICULE DE BREVET EUROPEEN

(45) Date de publication du fascicule du brevet:
**02.11.89**

(51) Int. Cl.⁴: **B60R 13/06**

(21) Numéro de dépôt: **87400873.3**

(22) Date de dépôt: **16.04.87**

(54) Armature métallique déformable pour joint d'étanchéité et joint d'échantéité comporatnt une telle armature metallique.

(30) Priorité: **21.04.86 FR 8605725**

(43) Date de publication de la demande:
**28.10.87 Bulletin 87/44**

(45) Mention de la délivrance du brevet:
**02.11.89 Bulletin 89/44**

(84) Etats contractants désignés:
**AT BE CH DE ES FR GB GR IT LI LU NL SE**

(56) Documents cités:
**DE-A- 3 048 743**
**DE-A- 3 331 901**
**FR-A- 2 324 850**
**GB-A- 408 423**
**US-A- 2 026 972**
**US-A- 2 204 630**

(73) Titulaire: **STANDARD PRODUCTS INDUSTRIEL, 9, rue Louis Rameau, F-95872 Bezons(FR)**

(72) Inventeur: **Branjonneau, René Pierre, 191, avenue de Versailles, F-75016 Paris(FR)**
Inventeur: **Mestdaght, Pierre, 12 rue Grandgousier, F-93140 Bondy(FR)**

(74) Mandataire: **Portal, Gérard et al, Cabinet Beau de Loménie 55, rue d'Amsterdam, F-75008 Paris(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention a pour objet une nouvelle armature métallique déformable pour joint d'étanchéité et a également pour objet le joint d'étanchéité comportant une telle armature métallique.

Les joints d'étanchéité de section en U en caoutchouc sont communément utilisés pour le calfeutrage des portes ou des cadres de portes de voitures automobiles et pour l'étanchéité en combinaison, par exemple, avec un profilé creux. Ces joints doivent être flexibles afin d'épouser la forme des rebords de carrosserie mais ils doivent avoir une certaine rigidité pour assurer leur fixation, par pincement, sur lesdits rebords.

Ainsi, ces joints d'étanchéité sont armés par des armatures métalliques, noyées dans la matière caoutchouteuse, qui sont constituées par une succession d'agrafes reliées par une ou plusieurs entretoises. Par exemple, le brevet français n° 1323108 décrit déjà des armatures métalliques telles que mentionnées ci-dessus.

De plus, il a été proposé d'associer à l'armature métallique une ou plusieurs fibres inextensibles en viscose ou en verre avec une sous-couche d'adhérence appropriée, ce qui permet de faire naître dans le joint une zone privilégiée et prédéterminée de flexion selon ce qui est appelé "la fibre neutre".

Ainsi, le brevet français n° 2452643 décrit un dispositif semblable où une fibre est positionnée sur la face externe d'une branche de l'armature métallique en forme de U par extrusion avec le matériau élastomérique. De cette manière, on obtient un contrôle amélioré de la zone moyenne de flexion.

De même, le brevet français n° 2438536 décrit un joint d'étanchéité constitué d'une armature métallique enrobée dans un support caoutchouteux. De manière à rendre ce joint inextensible, il y est associé, noyé dans la masse du matériau élastomérique, un élément inextensible réalisé en une matière appropriée et situé à la base du U. Cet élément est collé à cette même base.

La demande de brevet DE 3 048 743 concerne généralement une bande profilée en matériau élastomère, avec une armature constituée d'un feuillard qui est alternativement incisé à partir de ses bords longitudinaux, ce feuillard étant étiré dans sa direction longitudinale lors de son utilisation. Par ailleurs, il est mentionné que des fils résistant à la traction sont disposés des deux côtés des arêtes de l'armature afin que la bande profilée ne s'allonge pas. Une telle armature correspond à celle définie dans le préambule de la revendication 1.

Le brevet US 2 204 630 concerne généralement un profilé de guidage de vitre et révèle une armature métallique réalisée au moyen de fils de fer conformés en boucles et entrelacés avec un tissu de fibres.

Par ailleurs, ce brevet révèle l'utilisation de deux fils raidisseurs cousus autour des fils de fer dans le tissu. La fixation de ces fils raidisseurs est étroitement liée à la présence du tissu de fibres.

La demande de brevet FR 2 324 850 concerne également une bande de fil métallique ondulé pour des profilés de guidage de vitre, de feuillures de porte ou de protections d'arête.

Plus précisément, cette demande de brevet révèle une bande de fil métallique ondulé, fixé au niveau de ses branches d'ondulation par une ou plusieurs bandes reliées par un adhésif.

Le brevet US 2 026 972 révèle quant à lui une armature métallique obtenue à partir d'un ruban dont les bords longitudinaux ont été alternativement incisés.

Le mode de réalisation de l'invention permet d'obtenir un joint d'étanchéité présentant des améliorations dans plusieurs domaines par rapport à l'art antérieur tel qu'il vient d'être décrit. Il permet d'obtenir une armature métallique déformable en rayon dans tous les sens mais possédant des valeurs d'agrafage et de dégrafage identiques à celles connues jusqu'ici.

L'invention permet, en outre, de positionner une fibre neutre rigoureusement sur la ligne de points souhaitée. Ceci favorise au maximum la prise de rayon d'un tube d'étanchéité collé ou extrudé.

Selon l'invention, l'armature métallique déformable pour joint d'étanchéité de carrosserie de section en forme de U est associée à une ou plusieurs fibres inextensibles positionnées au niveau des branches du U. Elle est caractérisée en ce qu'elle est obtenue à partir d'un ruban métallique comportant des entailles le long des bords longitudinaux, orthogonales à ceux-ci, d'une longueur légèrement inférieure à la largeur du ruban, une entaille d'un bord alternant avec une entaille de l'autre bord, et en ce que les fibres inextensibles sont fixées au niveau des extrémités des entailles par un lien passant successivement au travers des entailles et par-dessus la face de l'armature opposée à celle sur laquelle la fibre est positionnée.

De préférence, l'armature comporte des orifices au niveau de l'extrémité interne de chaque entaille, le lien précité passant alors au travers de ces orifices.

Avantageusement, le niveau de l'extrémité de chaque entaille, et donc de chaque orifice, est prédéterminé réglable.

Selon un mode de réalisation particulier, la ou les fibres inextensibles sont positionnées à l'intérieur des branches du U, le lien précité passant ainsi par-dessus la face extérieure de l'armature.

Ce lien peut être déposé par tissage, tricotage ou couture, collage, sertissage, soudure ou ruban adhésif.

En outre, les lamelles définies entre les entailles peuvent être réalisées parallèles ou non parallèles en déployant le ruban constituant l'armature.

D'autres caractéristiques et avantages de l'invention seront mieux compris à la lecture de la description qui va suivre d'un mode de réalisation et en se référant aux dessins annexés sur lesquels :

- la figure 1 est une vue en perspective de l'armature métallique plane (non conformée) associée à deux filaments fixés chacun par un lien ;
- la figure 2 est une vue en section longitudinale selon II-II de la figure 1 ;
- la figure 3 est une vue en perspective en arraché d'un joint d'étanchéité obtenu à partir de l'armature métallique selon l'invention.

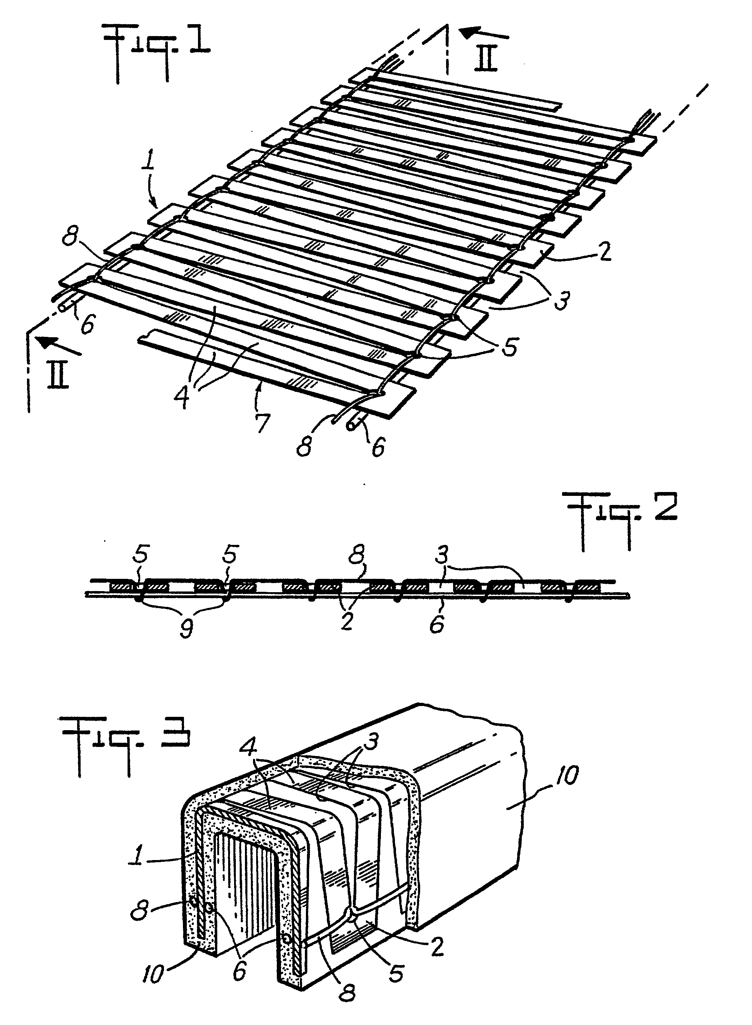

Selon la figure 1, l'armature métallique 1 est constituée d'un ruban métallique 2 comportant des entailles 3 le long des bords longitudinaux, orthogonales à ceux-ci, d'une longueur légèrement inférieure à la largeur du ruban et équidistantes les unes des autres de manière que, lorsque le ruban est déployé, on obtienne une structure en dents de scie où les lamelles 4 individuelles la constituant sont identiques. Par ailleurs, chaque extrémité interne d'entaille est poinçonnée de manière à créer un orifice 5 dont l'utilité sera expliquée ci-après. Cet orifice peut être éventuel si la découpe des entailles est conformée de manière adéquate.

Ce ruban métallique est obtenu par taillage au moyen de lames alternatives ou rotatives, écartement et laminage de régularisation enchaînés.

Deux fibres 6 sont positionnées longitudinalement sur le ruban déployé à hauteur des orifices 5 et sur la face interne 7. C'est-à-dire la face qui, lorsque le ruban sera formé en U, constituera la face interne de ce "U". Ces fibres sont inextensibles et sont par exemple en viscose ou en verre. Les fibres 6 sont fixées par un cordage 8 comme cela est indiqué à la figure 2. C'est-à-dire en formant des boucles 9 enserrant les fibres 6 au niveau des orifices 5 puis en passant sur la face externe du ruban métallique 2.

Le montage est assuré par trame et maille (système machine à coudre par exemple).

Bien entendu, d'autres modes de fixation faisant appel à des points de couture plus compliqués peuvent être employés. Par exemple, une boucle supplémentaire peut être créée au niveau de chaque base d'entaille comprise entre deux orifices 5.

L'armature métallique 1 est conformée en "U" puis noyée par extrusion dans un matériau élastomérique 10 pour donner la forme du joint d'étanchéité illustrée à la figure 3 comportant une âme rigide formée de l'armature métallique. L'armature peut être aussi conformée après extrusion.

Bien entendu, l'invention n'est pas limitée au mode de réalisation illustré aux figures 1, 2, 3. Par exemple, le joint d'étanchéité peut être associé à un profilé creux ou à des lèvres. Un fil de fer peut remplacer les cordages de fixation des fibres. On peut faire varier le positionnement des filaments selon la longueur des entailles. Ainsi, le niveau de l'extrémité de chaque entaille est prédéterminé réglable à volonté, ce qui permet de fixer le niveau de fibres inextensibles 6 à volonté.

Plusieurs avantages sont liés au mode de réalisation selon l'invention.

Il permet de positionner rigoureusement une fibre neutre sur la ligne de points souhaitée, à l'aide d'un perçage positionné. Ceci favorise au maximum la "prise de rayon" d'un tube d'étanchéité. On obtient également une compressibilité de l'armature.

Par ailleurs, il permet de réaliser une économie de matière appréciable car l'armature est obtenue par un usinage pratiquement sans déchets, en métal déployé d'un ruban d'acier, un mètre d'acier entrant conduisant à un mètre cinquante d'acier sortant.

Enfin, le système obtenu apporte une régularité de pas exemplaire favorisant l'extrusion ou la coextrusion ultérieure.

L'invention permet l'obtention d'une pince à joint type "porte de voiture" avec aspect, tenue et étanchéité accrus, de ce fait améliorée.

La prise de rayons est universelle en toute position dans l'espace, et est favorisée par la possibilité de placer la ligne de fibre neutre à volonté sur la pince, avec montabilité améliorée par la possibilité de comprimer et déformer la série d'agrafes ou lamelles en théorie, le système étant par contre inextensible.

L'avantage supplémentaire de l'armature selon l'invention et du procédé de fabrication par découpe par entaille concomitant, consiste en une amélioration économique par le fait d'une usinabilité simplifiée (outillage moins complexe que les armatures traditionnelles) par lames en coup à coup ou taillé par rotation, sans copeaux eu égard au poinçonnage des trous de la ligne de fibre neutre choisie, en ruban métallique déployé, accroissant la longueur produite obtenue par rapport à la longueur initiale, avec dépose de fil de maintien par tissage, tricotage ou couture, collage, sertissage, soudure ou ruban adhésif. Le fil de base pouvant être unique n'est pas limité en quantité.

Selon l'invention, on prévoit de préférence la fixation des fibres inextensibles 6 au niveau des extrémités internes 5 des entailles 3 par le lien 8, c'est-à-dire pour un bord donné que le lien 8 ne passe pas autour de la fibre 6 au niveau de l'extrémité ouverte externe de l'entaille 3, comme représenté aux figures 1 à 3. On pourrait cependant prévoir le passage du lien 8 autour des fibres inextensible 6, dans chaque entaille, qu'il s'agisse d'une extrémité fermée interne 5 ou d'une extrémité ouverte externe de l'entaille 3. On peut prévoir aussi que le lien 8 ne passe qu'au travers de certaines extrémités internes des entailles bien que cela soit moins avantageux.

**Revendications**

1. Armature métallique (1) déformable notamment pour joint d'étanchéité de carrosserie de section en forme de U associée à une ou plusieurs fibres inextensibles (6) positionnées au niveau des branches du U, ladite armature étant obtenue à partir d'un ruban métallique (2) comportant des entailles (3) le long des bords longitudinaux, orthogonales à ceux-ci, d'une longueur légèrement inférieure à la largeur du ruban, une entaille d'un bord alternant avec une entaille de l'autre bord, caractérisée en ce que les fibres inextensibles sont fixées au niveau des extrémités des entailles par un lien (8) passant successivement au travers des entailles et par dessus la face de l'armature opposée à celle sur laquelle la fibre est positionnée.

2. Armature selon la revendication 1, caractérisée en ce que ladite armature comporte des orifices (5) au niveau de l'extrémité interne de chaque entaille, le lien précité (8) passant au travers de ces orifices (5).

3. Armature selon la revendication 1 ou 2, caractérisée en ce que les lamelles (4) définies par les entailles (3) sont réalisées parallèles.

4. Armature selon la revendication 1 ou 2, caractérisée en ce que les lamelles (4) définies par les entailles (3) ont une structure en dents de scie à la suite d'un déploiement du ruban (2).

5. Armature selon l'une quelconque des revendications 1 à 4, caractérisée en ce que le lien (8) est déposé par tissage, tricotage ou couture, collage, sertissage, soudure ou ruban adhésif.

6. Armature selon l'une quelconque des revendications 1 à 5, caractérisée en ce que la ou les fibres inextensibles (6) sont positionnées à l'intérieur des branches du U, le lien précité (8) passant ainsi par dessus la face extérieure de l'armature (1).

7. Armature selon l'une quelconque des revendications 1 à 5, caractérisée en ce que le niveau de l'extrémité de chaque entaille, et donc de chaque orifice (5), est prédéterminé réglable.

8. Joint d'étanchéité en matériau élastomérique comportant une lame rigide formée d'une armature métallique selon l'une quelconque des revendications 1 à 7.

## Patentansprüche

1. Verformbare Metallarmierung (1), insbesondere für Karosserie-Dichtungsschienen mit U-förmigem Querschnitt, in Kombination mit einer oder mehreren im Bereich der Schenkel des U angeordneten undehnbaren Faser(n) (6), welche Armierung aus einem Metallband (2) mit Einschnitten (3) entlang der Längsränder normal zu denselben von einer Länge etwas geringer als die Breite des Bandes erhalten ist, wobei ein Einschnitt eines Randes mit einem Einschnitt des anderen Randes abwechselt, dadurch gekennzeichnet, daß die undehnbaren Fasern im Bereich der Enden der Einschnitte mittels eines Verbindungsmittels (8) befestigt sind, das nacheinander quer durch die Einschnitte und über der Seite der Armierung, die jener, auf der die Faser angeordnet ist, gegenüberliegt, verläuft.

2. Armierung nach Anspruch 1, dadurch gekennzeichnet, daß die Armierung Öffnungen (5) im Bereich des inneren Endes jedes Einschnitts aufweist, wobei das Verbindungsmittel (8) durch die Öffnungen (5) geht.

3. Armierung nach Anspruch 1 oder 2, dadurch gekennzeichnet, daß die von den Einschnitten (3) begrenzten Lamellen (4) parallel ausgeführt sind.

4. Armierung nach Anspruch 1 oder 2, dadurch gekennzeichnet, daß die von den Einschnitten (3) begrenzten Lamellen (4) nach dem Auffalten des Bandes (2) die Struktur von Sägezähnen haben.

5. Armierung nach einem der Ansprüche 1 bis 4, dadurch gekennzeichnet, daß das Verbindungsmittel (8) durch Weben, Wirken oder Nähen, Kleben, Klemmen, Schweißen oder mit Klebeband eingelegt ist.

6. Armierung nach einem der Ansprüche 1 bis 5, dadurch gekennzeichnet, daß die undehnbare(n) Faser(n) (6) innerhalb der Schenkel des U angeordnet sind, wobei das Verbindungsmittel (8) dann über der Außenfläche der Armierung (1) verläuft.

7. Armierung nach einem der Ansprüche 1 bis 5, dadurch gekennzeichnet, daß der Bereich des Endes jedes Einschnitts und somit jedes Lochs (5) vorbestimmt regulierbar ist.

8. Dichtungsschiene aus elastomerem Material, umfassend eine durch eine Metallarmierung nach einem der Ansprüche 1 bis 7 gebildete starre Lamelle.

## Claims

1. Deformable metal reinforcement (1) in particular for a car-body seal having a U-shaped cross-section, associated with one or more inextendable fibres (6) positioned in the region of the arms of the U, the said reinforcement being obtained from a metal strip (2) comprising incisions (3) along the longitudinal edges, perpendicular to the latter, having a length slightly less than the width of the strip, an incision of one edge alternating with an incision of the other edge, characterized in that the inextendable fibres are fixed in the region of the ends of the incisions by a tie (8) passing successively through the incisions and over the surface of the reinforcement opposite to that on which the fibre is positioned.

2. Reinforcement according to Claim 1, characterized in that the said reinforcement comprises orifices (5) in the region of the internal end of each incision, the aforementioned tie (8) passing through these orifices (5).

3. Reinforcement according to Claim 1 or 2, characterized in that the lamellae (4) defined by the incisions (3) are formed parallel.

4. Reinforcement according to Claim 1 or 2, characterized in that the lamellae (4) defined by the incisions (3) have a sawtooth structure when the strip (2) is spread out.

5. Reinforcement according to any one of Claims 1 to 4, characterized in that the tie (8) is deposited by means of weaving, knitting or sewing, bondling, crimping, welding or adhesive tape.

6. Reinforcement according to any one of Claims 1 to 5, characterized in that the inextendable fibre(s) (6) are positioned inside the arms of the U, the aforementioned tie (8) thus passing over the external surface of the reinforcement (1).

7. Reinforcement according to any one of Claims 1 to 5, characterized in that the level of the end of each incision, and therefore of each orifice (5), is predetermined so as to be adjustable.

8. Seal made of elastomeric material comprising a rigid plate consisting of a metal reinforcement according to any one of Claims 1 to 7.

Fig.1

Fig. 2

Fig. 3